Europäisches Patentamt

European Patent Office

Office européen des brevets

(19)

(11) Veröffentlichungsnummer : **0 047 430**
**B1**

(12) **EUROPÄISCHE PATENTSCHRIFT**

(45) Veröffentlichungstag der Patentschrift :
20.04.83

(21) Anmeldenummer : **81106612.5**

(22) Anmeldetag : **26.08.81**

(51) Int. Cl.³ : **C 09 D 11/02, C 09 D 7/00**

(54) **Druckpaste.**

(30) Priorität : **04.09.80 DE 3033276**

(43) Veröffentlichungstag der Anmeldung :
**17.03.82 Patentblatt 82/11**

(45) Bekanntmachung des Hinweises auf die Patenterteilung : **20.04.83 Patentblatt 83/16**

(84) Benannte Vertragsstaaten :
**AT BE CH DE FR GB IT LI NL**

(56) Entgegenhaltungen :
**FR A 2 213 327**
**FR A 2 254 358**
**GB A 1 248 319**

(73) Patentinhaber : **BASF Aktiengesellschaft**
**Carl-Bosch-Strasse 38**
**D-6700 Ludwigshafen (DE)**

(72) Erfinder : **Distler, Harry, Dr.**
**In den Hahndornen 5**
**D-6719 Bobenheim (DE)**
Erfinder : **Widder, Rudi, Dr.**
**In der Taesch 7**
**D-6906 Leimen (DE)**
Erfinder : **Uhl, Guenter**
**Pfrimmanlage 55**
**D-6520 Worms (DE)**

# 0 047 430

## Druckpaste

Die Erfindung betrifft Druckpasten auf der Basis von Öl-in-Wasser-Emulsionen oder wäßrigen Lösungen, die neben den in Druckpasten üblichen Bestandteilen eine Kombination schaumdämpfender Mittel mit synergistischer Wirkung enthalten.

Druckpasten jeglicher Art neigen beim Drucken mehr oder weniger zum Schäumen, besonders wenn sie Dispergier- und oder Emulgiermittel enthalten, was meist der Fall ist. Das Schäumen muß durch schaumdämpfende Zusätze unterdrückt werden, wenn gleichmäßige und konturenscharfe Drucke erzielt werden sollen. Es sind schon verschiedene derartige Zusätze vorgeschlagen worden, beispielsweise Fettsäureester von Alkyläthern von Blockcopolymerisaten des Äthylen- und Propylenoxids (DE-C-21 14 609 und DE-A-21 43 988). Sie sind jedoch schwierig technisch reproduzierbar und fallen daher mit schwankendem schaumdämpfendem Effekt an.

Schaumdämpfer auf Silikonbasis werden zwar eingesetzt, sie sind jedoch nicht in jeder Hinsicht befriedigend.

In der CH-PS 561 322 werden Carbonsäureester mit jeweils 4 bis 18 Kohlenstoffatomen im Alkylrest des Alkohols sowie der Säure, vorzugsweise in Mischung mit tris-$C_{4-8}$-Alkylphosphaten, insbesondere Tributylphosphat, als Schaumdämpfer beim optischen Aufhellen von Synthesefasern nach dem Thermosol-Verfahren beschrieben. Die Übertragung dieser Erfindung auf den Textildruck ist nicht möglich, denn Triisobutylphosphat geht bei Druckpasten mit Verdickungen auf der Basis von Öl-in-Wasser-Emulsionen in die Ölphase und wird damit wirkungslos, und bei Pigmentdruckpasten wirkt es auf das Bindemittel als Weichmacher, so daß der Druck einen schmierigen Griff erhält und bei größerer Menge sogar klebrig wird. Höhere Trialkylphosphate wie Trioctylphosphat sind schwer zugänglich und auf dem Markt zumindest im technischen Maßstab nicht erhältlich.

Der Erfindung lag die Aufgabe zugrunde, einen Entschäumer für den Textildruck zu entwickeln, der die geschilderten Nachteile der bekannten Entschäumer überwindet und dabei leicht zugänglich ist.

Die Lösung dieser Aufgabe besteht in der anspruchsgemäßen Druckpaste. Diese enthält erfindungsgemäß 0,05 bis 5, vorzugsweise 0,1 bis 0,5 Gew.-%, bezogen auf die gesamte Druckpaste, eines Entschäumers, der seinerseits aus einer flüssigen Lösung von 0,1 bis 50, vorzugsweise 1 bis 20 Gew.-%, bezogen auf den Entschäumer, eines Monoalkylphosphates mit 10 bis 20, vorzugsweise 16 bis 18 Kohlenstoffatomen im Alkylrest in 50 bis 99,9, vorzugsweise 80 bis 99 Gew.-%, entweder eines aliphatischen Esters mit einem Molekulargewicht von 200 bis 800, vorzugsweise 300 bis 600, oder eines über 100, vorzugsweise über 120 °C siedenden aliphatischen Kohlenwasserstoffs besteht.

Der schaumdämpfende Effekt der Mischung ist ungleich größer als die Summe der Effekte der Einzelkomponenten, also liegt ein ausgeprägter Synergismus vor. Dieser war in keiner Weise vorauszusehen. Die Komponenten sind großtechnische, leicht zugängliche Produkte, sie beeinflußen den Griff des Druckes nicht nachteilig ; Stand, Farbausbeute sowie Brillanz und Druckpastenstabilität werden ebenfalls nicht beeinträchtigt.

Beispiele für geeignete Monoalkylphosphate sind die Monophosphate des n- und i-Decanols, -Dodecanols, -Tridecanols, insbesondere des Cetyl- und des Stearylalkohols. Selbstverständlich enthalten die technischen Monoalkylphosphate auch Anteile an entsprechenden Di- und Triphosphaten. Diese sind weder störend, noch tragen sie zum Effekt nennenswert bei.

Bei den aliphatischen Estern vom Molekulargewicht 200 bis 800 können die Säure- und die Alkoholreste unabhängig voneinander geradkettig oder verzweigt sein und innerhalb der genannten Molekulargewichtsgrenzen 1 bis 20 Kohlenstoffatome enthalten. Die Summe der Kohlenstoffatome der Alkohol- und Säurereste muß also mindestens 12 betragen. Die Estergruppierung kann in den Estern ein- oder mehrfach enthalten sein, und als Säurekomponenten kommen neben den bevorzugten gesättigten, wie Stearinsäure und 2-Äthylhexansäure, auch olefinisch ungesättigte, z. B. Ölsäure, insbesondere natürliche Gemische von gesättigten und ungesättigten Fettsäuren, wie sie in pflanzlichen und tierischen Fetten und Ölen vorkommen, sowie hydroxylsubstituierte Säuren, z. B. Zitronensäure, und in Kombination mit langkettigen Alkoholen, z. B. Stearylalkohol, auch kurzkettige Carbonsäuren wie Propion- und Essigsäure und sogar Ameisensäure in Betracht. Umgekehrt kommen in Kombination mit langkettigen Fettsäuren auch niedere Alkohole bis hinunter zum Methanol als Esterbestandteil in Frage. Bevorzugt werden aber als solche höhere Alkohole mit 8 bis 18 Kohlenstoffatomen, wie 2-Äthylhexanol, n- und i-Decanol, Tridecanol und Stearylalkohol.

Mehrwertige Alkohole sind weniger geeignet. Beispielsweise würden Glyceride, wie tierische oder pflanzliche Öle, den Griff der Drucke ungünstig beeinflußen. Geeignete Ester sind beispielsweise Dodecylformiat, Decylacetat, tris-Tridecylcitrat, tris-(2-Äthylhexyl)-citrat, 2-Äthylhexylester der 2-Äthylhexansäure, vorzugsweise Stearinsäure-i-decyl- und -tridecylester. Ihnen allen ist gemeinsam, daß ihre physikochemischen Eigenschaften von dem Kohlenwasserstoffanteil des Moleküls beherrscht werden, so daß sie den reinen aliphatischen Kohlenwasserstoffen ähneln.

Die aliphatischen Kohlenwasserstoffe mit Siedepunkt über 100 °C können natürlichen (Erdöl) wie synthetischen Ursprungs (z. B. Fischer-Tropsch-Verfahren) sein. Sie können geradkettig oder verzweigt sein, meist sind es Gemische. Ihre mittlere Molekülgröße ist nach unten durch den Mindestsiedepunkt bei Normaldruck und nach oben durch die Bedingung begrenzt, daß sie bei Raumtemperatur — zumindest in

2

Mischung mit den Monoalkylphosphaten — flüssig sind. Es kann auch Benzin mit entsprechendem Siedebereich verwendet werden, das in untergeordneter Menge aromatische Anteile enthält.

Die übrigen Bestandteile der erfindungsgemäßen Druckpaste sind die üblichen in üblicher Menge. So enthält jede Druckpaste — meist neben weiteren Hilfsmitteln — etwa 1 bis 20 Gew.-% eines Farbstoffs oder Pigmentes, und im letztgenannten Falle etwa 3 bis 25 Gew.-% mindestens eines Bindemittels, sowie 0,05 bis 15 Gew.-% mindestens eines in Wasser gelösten Verdickungsmittels und/oder 10 bis 90 Gew.-%, stets bezogen auf die gesamte Druckpaste, einer Verdickeremulsion, sowie bis 1,5 Gew.-% Dispergiermittel.

Das Bindemittel besteht in der Regel aus einem vernetzungsfähigen Mischpolymerisat, beispielsweise auf der Basis von Vinylketonen, Vinylestern, Vinyläthern, Malein- und Fumarsäureestern, Styrol, Vinylchlorid, Vinylidenchlorid, Acrylnitril, vor allem (Meth-)Acrylsäureestern und Butadien und N-Methylolgruppen, N-Methyloläthergruppen oder Halogenhydringruppen enthaltenden Monomeren. Diese Mischpolymerisate können auch wasserlöslichmachende und in wäßriger Phase verdickend wirkende Gruppen, z. B. neutralisierte Carbonsäuregruppen, enthalten oder zusammen mit solche Gruppen enthaltenden Polymerisaten oder Mischpolymerisaten verwendet werden. Bewährte Bindemittel werden z. B. in den deutschen Patentschriften 11 40 890, 12 57 736 und 16 19 661 beschrieben.

Als Verdickungsmittel kommen wäßrige Lösungen von — meist modifizierten — natürlichen oder synthetischen Hochpolymeren wie Natriumalginat, Carboxymethylcellulose, Kernmehläther, Stärkeäther oder Carbonsäuregruppen enthaltende Polymerisate und/oder Öl-in-Wasser-Emulsionsverdickungen, meist mit Schwerbenzin, in Betracht.

Als weitere übliche Druckhilfsmittel, die ebenfalls mitverwendet werden können oder ggf. müssen, wären beispielsweise zu nennen : Dispergiermittel für Pigmente und Emulgatoren für das Schwerbenzin. Als solche kommen die üblichen anionischen oder nichtionischen Tenside in Betracht, z. B. Ligninsulfonate, Kondensationsprodukte von Formaldehyd mit Phenol- und/oder Naphthalinsulfonsäuren, Sulfomethylierungsprodukte von Phenolen und Polyvinylalkoholsulfate, bzw. oxäthylierte Alkylphenole oder oxäthylierte Fettalkohole mit HLB (hydrophilic-lipophilic balance)-Werten zwischen etwa 2 und 17 ; Katalysatoren für die Härtung des Bindemittels (meist saure oder potentiell saure Salze) ; Feuchthaltemittel (Glycerin, Glykol, Harnstoff) ; Griffvariatoren (z. B. Silikonöl) ; Färbehilfsmittel (sog. Carrier ; sowie Egalisierhilfsmittel) ; Netzmittel (z. B. wasserlösliche Alkohole) und Rekristallisationsverhinderer. Die Einsatzmengen können von Fall zu Fall stark variieren ; sie sind dem Fachmann geläufig und bedürfen hier keiner Erläuterung.

Die fertige Druckpaste erhält man durch einfaches Zusammenrühren der Komponenten. Die Herstellung der Öl-in-Wasser-Emulsion bedarf eines intensiven Rührens.

Die erfindungsgemäße Druckpaste ist für den Druck auf Textilien aus allen natürlichen und synthetischen Fasern, sowie für Papier und Vliese geeignet.

Die in den Beispielen genannten Teile und Prozente beziehen sich auf das Gewicht.

## Beispiel 1

30 Teile eines 30 %igen Pigmentteiges (C.I. 12 485)

115 Teile einer hochviskosen 6 %igen wäßrigen Zubereitung von polyacrylsaurem Ammonium mit einem Molgewicht von etwa 4 000 000

150 Teile einer 45 %igen wäßrigen Dispersion eines Mischpolymerisates aus 67 Teilen Butadien, 29 Teilen Styrol und 4 Teilen N-Methylolacrylamid

700 Teile Wasser und

5 Teile eines Paraffinöls vom Siedepunkt 190 bis 250 °C, das 15 % mono-Stearyl-phosphat enthält

werden zusammengegeben und unter Rühren homogenisiert.

Man erhält eine Druckpaste, die auch auf schnellaufenden Maschinen wie Rouleauxdruckmaschinen ohne störende Schaumbildung verarbeitbar ist. Das Druckbild ist dadurch bedingt gut, auch beim kontinuierlichen Bedrucken größerer Mengen Gewebe über längere Zeit.

Zu Vergleichszwecken wurde die schaumdämpfende Wirkung nach DIN 53 902, Blatt 1 (Schaumschlag-Methode), geprüft, und zwar

1. die beschriebene Druckpaste ohne jeden schaumdämpfenden Zusatz (Blindprobe) ;
2. dito, jedoch mit 4,25 g des genannten Paraffinöls pro Kilogramm Druckpaste ;
3. Druckpaste wie bei (1), jedoch mit 0,75 g mono-Stearylphosphat pro Liter ;
4. Druckpaste mit beiden Zusätzen (2) und (3), also mit 5 g/kg einer 15 %igen Lösung von mono-Stearylphosphat in dem genannten Paraffinöl.

Zur Prüfung wurde die Druckpaste jeweils im Gewichtsverhältnis 5 Teile Paste zu 7 Teilen Wasser verdünnt. Erfahrungsgemäß sind die so erhaltenen Werte für die Schaumdämpfung direkt vergleichbar mit dem Effekt auf der Druckmaschine.

Die Zahlen der folgenden Tabelle geben die jeweils erhaltenen Milliliter Schaum an.

| | 1 | 2 | 3 | 4 |
|---|---|---|---|---|
| sofort | 120 | 120 | 50 | 0 |
| nach 30 sec | 120 | 120 | 45 | 0 |
| nach 60 sec | 120 | 120 | 40 | 0 |
| nach 120 sec | 120 | 120 | 40 | 0 |

Wie man sieht, hat die erfindungsgemäß einzusetzende Kombination einen klaren synergistischen Effekt.

## Beispiel 2

132 Teile Wasser werden zusammen mit
50 Teilen einer 6 %igen wäßrigen Lösung von Natriumalginat
und
50 Teilen einer 20 %igen wäßrigen Lösung eines mit 25 Mol Ethylenoxid (EO) umgesetzten $C_{16-18}$-Fettalkohols vermischt.

Dann rührt man

3 Teile eines hochsiedenden Gemisches von Aliphaten, welches 20 % mono-Stearyl-phosphat enthält, ein. Anschließend emulgiert man in diese Mischung bei ca. 3 000 U/min langsam
620 Teile Benzin (Siedepunkt 140-200 °C) ein. Unter schwächerem Rühren gibt man dann
120 Teile einer 40 %igen wäßrigen Dispersion eines Mischpolymerisates aus 65 Teilen n-Butylacrylat, 20 Teilen Acrylnitril, 10 Teilen Styrol, 1 Teil Acrylamid und 4 Teilen N-Methylolacrylamid und
25 Teile eines 30 %igen wäßrigen Farbstoffteigs (C.I. 60 005) zu.

Es wird eine Druckpaste vom Typ Öl-in-Wasser erhalten, die bei der Verarbeitung keine Schaumbildung zeigt und somit ein optimales Druckbild ergibt.

## Beispiel 3

Herstellung der Verdickung

400,0 Teile einer 8 %igen wäßrigen Lösung eines handelsüblichen Kernmehläthers
200,0 Teile einer 10 %igen wäßrigen Lösung eines handelsüblichen Stärkeäthers
7,0 Teile Ölsäure-diethanolamid (Fixierhilfsmittel)
10,0 Teile Na-m-Nitrobenzolsulfonat
2,5 Teile eines Citronensäure-tri-i-decylesters, der 15 % mono-Talgfett-phosphat enthält und
380,5 Teile Wasser werden gemischt und mit Citronensäure auf pH 5,5 eingestellt.

Herstellung der Druckpaste

40 Teile einer 20 %igen wäßrigen Aufarbeitung eines handelsüblichen Dispersionsfarbstoffs (C.I. Disperse Blue 148) werden mit

960 Teilen der Verdickung gemischt.

Man erhält so eine einwandfrei verarbeitbare Druckpaste, die auch bei den starken Beanspruchungen auf schnellaufenden Druckmaschinen nicht schäumt.

## Beispiel 4

Herstellung einer Druckpaste

600 Teile einer 3 %igen Na-Alginatverdickung in Wasser werden mit
100 Teilen Harnstoff
10 Teilen Na-m-Nitrobenzolsulfonat und
20 Teilen Soda vermischt. Dann wird mit
238 Teilen Wasser auf Druckviskosität eingestellt. Anschließend rührt man
2 Teile eines Stearinsäure-i-decylesters, der 20 % mono-Tridecyl-phosphat enthält, und
30 Teile eines 100 %igen pulverförmigen handelsüblichen Reaktivfarbstoffs (Reaktivblau 72) ein.

Man erhält eine schaumfreie Druckpaste, die auch bei der Verarbeitung auf den Druckmaschinen keine Schaumbildung zeigt.

Vergleichende Modellversuche

A. Die schaumdämpfende Wirkung mehrerer erfindungsgemäßer Kombinationen wird im Vergleich zu der der Einzelkomponenten gegenüber wäßrigen Lösungen von im Textildruck häufig verwendeten Emulgatoren nach DIN 53 902, Blatt 1 geprüft. Die Zahlen der folgenden Tabelle geben die jeweils erhaltenen Milliliter Schaum an.

(Siehe die Tabelle, Seiten 6 und 7)

Tabelle

| 0,5 %ige wäßrige Lösung von | | ohne Zusatz (Blind- probe) | mono- Stearyl- phosphat 10 %ig in Wasser | jeweils 2 g Zusatz pro Liter Emulgatorlösung | | |
|---|---|---|---|---|---|---|
| | | | | Paraffin- öl Kp 190 bis 250 °C | mono- Stearyl- phosphat 10 %ig in Paraffinöl | Citronen- säure-tri-i- nonylester |
| 20fach oxäthyliertem | sofort | 555 | 245 | 375 | 100 | 245 |
| Oleylalkohol | nach 30 sec | 545 | 235 | 375 | nach 2 sec 0 | 235 |
| | nach 60 sec | 540 | 225 | 365 | | 230 |
| | nach 120 sec | 540 | 190 | 325 | | 100 |
| 20fach oxäthyliertem | sofort | 600 | 185 | 550 | 50 | 390 |
| i-Nonylphenol | nach 30 sec | 600 | 150 | 535 | nach 2 sec 0 | 360 |
| | nach 60 sec | 600 | 120 | 510 | | 300 |
| | nach 120 sec | 600 | 70 | 475 | | 185 |
| Na-Salz des Schwefel- | sofort | 600 | 305 | 525 | 50 | 310 |
| säurehalbesters | nach 30 sec | 600 | 285 | 525 | nach 6 sec 0 | 180 |
| eines 25fach ox- | nach 60 sec | 570 | 275 | 520 | | 135 |
| äthylierten i-Octyl- | nach 120 sec | 570 | 215 | 500 | | 80 |
| phenols | | | | | | |

Tabelle (Fortsetzung)

| 0,5 %ige wäßrige Losung von | | jeweils 2 g Zusatz pro Liter Emulgatorlösung | | | | |
|---|---|---|---|---|---|---|
| | | mono-Stearyl-phosphat 1,0 %ig in Citronen-säure-tris-i-nonylester | 2-Äthylhexan-säure-2-äthyl-hexylester | mono-Stearyl-phosphat 10 %ig in 2-Äthyl-hexan-säure 2-äthyl-hexylester | Ölsäure-i-decyl-ester | mono-Stearyl-phosphat 10 %ig in Ölsäure-i-decyl-ester |
| 20fach oxäthyliertem | sofort | 50 | 350 | 150 | 460 | 50 |
| Oleylalkohol | nach 30 sec | nach 1 sec 0 | 320 | nach 12 sec 0 | 455 | nach 3 sec 0 |
| | nach 60 sec | | 305 | | 455 | |
| | nach 120 sec | | 270 | | 435 | |
| 20fach oxäthyliertem | sofort | 117 | 485 | 133 | 413 | 117 |
| i-Nonylphenol | nach 30 sec | nach 3 sec 0 | 470 | nach 10 sec 0 | 413 | nach 3 sec 0 |
| | nach 60 sec | | 460 | | 410 | |
| | nach 120 sec | | 395 | | 370 | |
| Na-Salz des Schwefel- | sofort | 45 | 485 | 135 | 353 | 107 |
| säurehalbesters eines | nach 30 sec | nach 8 sec 0 | 485 | nach 7 sec 0 | 353 | nach 2 sec 0 |
| 25fach oxäthylier- | nach 60 sec | | 475 | | 335 | |
| ten i-Octylphenols | nach 120 sec | | 445 | | 270 | |

B. Eine Druckpastengrundlage (= Druckpaste ohne Farbstoff), bestehend aus

3,5 Teilen Ethylen-Maleinsäureanhydrid-Mischpolymerisat im Molverhältnis 1 : 1 vom Molekulargewicht über 500 000

2,5 Teilen 25 %iger wäßriger Ammoniaklösung

5 Teilen einer 45 %igen wäßrigen Dispersion eines Mischpolymerisates aus

67 % Butylacrylat

29 % Styrol und

4 % N-Methylol-acrylamid und

914 Teilen Wasser

wird mit jeweils 0,25 % der erfindungsgemäß einzusetzenden Schaumdämpferkombination in wechselnden Mengenverhältnissen sowie der Einzelkomponenten versetzt, dann so weit mit Wasser verdünnt, daß sie sich bequem nach der Schaumschlagmethode (DIN 53 902, Blatt 1) prüfen läßt, und geprüft. Die Zahlen der folgenden Tabelle geben die jeweils erhaltenen Milliliter Schaum an.

| | sofort | nach 30 sec | nach 60 sec | nach 120 sec |
|---|---|---|---|---|
| ohne Zusatz (Blindprobe) | 175 | 175 | 175 | 175 |
| Paraffinöl Kp 190-250 °C | 103 | 103 | 103 | 103 |
| Monostearylphosphat 10 %ig in Wasser | 115 | 115 | 115 | 115 |
| Monostearylphosphat 50 %ig in Paraffinöl | 10 | nach 1 sec 0 | | |
| dito 10 %ig | 10 | nach 5 sec 0 | | |
| dito 2,5 %ig | 10 | nach 5 sec 0 | | |
| dito 1 %ig | 10 | nach 6 sec 0 | | |
| dito 0,5 %ig | 43 | 40 | 40 | 40 |
| Stearinsäure-i-decylester | 117 | 117 | 117 | 117 |
| Monostearylphosphat 50 %ig in Stearin-säure-i-decylester | 0 | | | |
| dito 10 %ig | 0 | | | |
| dito 2,5 %ig | 0 | | | |
| dito 1 %ig | 0 | | | |
| dito 0,5 %ig | 0 | | | |

**Anspruch**

Druckpaste, enthaltend neben Wasser und gegebenenfalls weiteren üblichen Druckhilfsmitteln

a) entweder 1 bis 20 Gew.% Farbstoff oder ebensoviel Pigment und 3 bis 25 Gew.% Bindemittel ;
b) 0,05 bis 15 Gew.% Verdickungsmittel und/oder 10 bis 90 Gew.% Verdickeremulsion ;
c) 0,05 bis 5 Gew.% Entschäumer,

dadurch gekennzeichnet, daß der Entschäumer aus einer bei Raumtemperatur flüssigen, 0,1 bis 50 gewichtsprozentigen Lösung eines Monoalkylphosphates mit 10 bis 20 Kohlenstoffatomen im Alkylrest in 50 bis 99,9 Gew.% entweder eines aliphatischen Esters mit einem Molekulargewicht von 200 bis 800 oder eines über 100 °C siedenden aliphatischen Kohlenwasserstoffs besteht.

**Claim**

A printing paste containing, in addition to water and, if desired, other conventional printing auxiliaries,

a) either 1 to 20 % by weight of dye or 1 to 20 % by weight of pigment and 3 to 25 % by weight of binder,

b) 0.05 to 15 % by weight of thickener and/or 10 to 90 % by weight of thickener emulsion, and

c) 0.05 to 5 % by weight to defoamer,

wherein the defoamer consists of a 0.1 to 50 % by weight solution, which is liquid at room temperature, of a monoalkyl phosphate where alkyl is of 10 to 20 carbon atoms, in 50 to 99.9 % by weight of an aliphatic ester having a molecular weight of from 200 to 800, or of an aliphatic hydrocarbon having a boiling point above 100 °C.

**Revendication**

Pâte d'impression contenant, outre de l'eau et, éventuellement, d'autres auxiliaires d'impression usuels,

a) soit 1 à 20 % en poids de matière colorante, soit une quantité égale de pigment et 3 à 25 % en poids de liant.

b) 0,05 à 15 % en poids d'épaississant et/ou 10 à 90 % en poids d'émulsion épaississante.

c) 0,05 à 5 % en poids d'antimousse

caractérisée par le fait que l'antimousse est constitué par une solution à 0,1 à 50 % en poids, liquide à la température ordinaire, d'un monoalkylphosphate, à 10 à 20 atomes de carbone dans le reste alkyle, dans 50 à 99,9 % en poids soit d'un ester aliphatique d'un poids moléculaire de 200 à 800, soit d'un hydrocarbure aliphatique bouillant au-dessus de 100 °C.